# EUROPÄISCHE PATENTSCHRIFT

(11) **EP 2 596 558 B1**
(45) Veröffentlichungstag und Bekanntmachung des Hinweises auf die Patenterteilung: **11.11.2015**
(21) Anmeldenummer: 10740580.5
(22) Anmeldetag: 23.07.2010
(51) Int. Cl.: H02B 15/02, G05B 19/409, G05F 5/00

(54) **KONFIGURIEREN EINES FELDGERÄTS IN EINER ANLAGE ZUR VERTEILUNG ELEKTRISCHER ENERGIE**
CONFIGURATION OF A FIELD DEVICE IN AN ARRANGEMENT FOR DISTRIBUTION OF ELECTRIC ENERGY
CONFIGURATION D'UN APPAREIL DE TERRAIN DANS UNE INSTALLATION POUR LA DISTRIBUTION D'ENERGIE ELECTRIQUE

(43) Veröffentlichungstag der Anmeldung: 29.05.2013
(73) Patentinhaber: Siemens Aktiengesellschaft, 80333 München (DE)
(72) Erfinder: JACHMANN, Thomas, Buffalo Grove, 60089 (US); REICHENBACH, Gunther, 90559 Burgthann (DE); SCHUSTER, Norbert, 90584 Allersberg (DE)
(86) Internationale Anmeldenummer: PCT/EP2010/060731
(87) Internationale Veröffentlichungsnummer: WO 2012/010216

(56) Entgegenhaltungen:
- WO-A1-03/081183
- WO-A2-2005/010625
- WO-A2-2005/106632
- WO-A2-2010/037145
- GB-A- 2 441 640
- US-A1- 2004 075 689

## Beschreibung

Die Erfindung betrifft ein Verfahren zum Konfigurieren eines Energieautomatisierungsgerätes sowie einen zur Durchführung eines solchen Verfahrens eingerichtete Konfigurationsrechner.

Energieautomatisierungsgeräte werden in Anlagen zum Schutz, zur Steuerung und zur Überwachung elektrischer Energieversorgungsnetze eingesetzt. Bei solchen Geräten kann es sich beispielsweise um elektrische Schutzgeräte, Stationsleitgeräte, Steuergeräte oder Messgeräte, wie z.B. sogenannte "Remote Terminal Units" handeln. Solche Energieautomatisierungsgeräte führen während ihres Betriebs mittels einer Steuereinrichtung (z.B. ein Mikroprozessor) eine Gerätesoftware aus, die die Funktionen des jeweiligen Energieautomatisierungsgerätes festlegt. Zur Anpassung an die jeweiligen Gegebenheiten des automatisiert betriebenen Energieversorgungsnetzes können zudem in der Gerätesoftware einzelne Parameter eingestellt werden. Im Zusammenspiel zwischen Gerätesoftware und den jeweiligen Parametern wird das Verhalten des Energieautomatisierungsgerätes während seines Betriebs festgelegt.

Moderne Energieautomatisierungsgeräte weisen häufig auch Benutzerschnittstellen in Form von Eingabemitteln (meist Tasten) und Anzeigeeinrichtungen (meist in Form von LCD-Modulen) auf, über die eine Vor-Ort-Bedienung des jeweiligen Energieautomatisierungsgerätes vorgenommen werden kann. In einem solchen Fall gehört zur Festlegung des Betriebs eines Energieautomatisierungsgerätes auch die Anpassung des Verhaltens und Aussehens der Benutzerschnittstellen, insbesondere von Anzeigeeinrichtungen.

An die Anzeigeeinrichtung eines Energieautomatisierungsgerätes wird zudem meist die Anforderung gestellt, dass ein von dem jeweiligen Energieautomatisierungsgerät geschützter, gesteuerter oder überwachter Abschnitt des elektrischen Energieversorgungsnetzes hinsichtlich seiner Topologie (z.B. in Form einer sogenannten Single-Line-Darstellung) angezeigt wird, z.B. indem ein von einem Schutzgerät überwachter Abzweig einer Unterstation auf dem Display des Schutzgerätes dargestellt wird. Um eine solche Anzeige zu erzeugen, musste bisher der Benutzer des jeweiligen Energieautomatisierungsgerätes entweder direkt mit der Vor-Ort-Bedienung des fraglichen Energieautomatisierungsgerätes oder mittels des Konfigurationsrechners in einem grafischen Editor die gewünschte Abbildung auf manuelle Weise erstellen und diese auf das Energieautomatisierungsgerät übertragen. Da einerseits die Größe und Auflösung der Anzeigeeinrichtungen von Energieautomatisierungsgeräten aus Kostengründen begrenzt ist und andererseits die grafischen Editoren häufig nur eine pixelbasierte Erstellung der gewünschten Abbildung zulassen, gestaltet sich die Erzeugung einer solchen Abbildung oft schwierig und langwierig. Ein solcher manueller Prozess ist zudem anfällig für Fehler, die die Bedienung des fraglichen Energieautomatisierungsgerätes negativ beeinflussen können, da die auf der Anzeigeeinrichtung dargestellt Anzeige nicht vollständig mit dem tatsächlichen Abschnitt des Energieversorgungsnetzes übereinstimmt.

Der Erfindung liegt daher die Aufgabe zugrunde, eine Verfahren und einen Konfigurationsrechner zur Konfigurierung eines elektrischen Energieautomatisierungsgerätes hinsichtlich einer auf einer Anzeigeeinrichtung des Energieautomatisierungsgerätes anzuzeigenden Darstellung eines Abschnitts des elektrischen Energieversorgungsnetzes anzugeben, mit dem die Konfigurierung einfacher und schneller sowie vergleichsweise weniger fehleranfällig durchgeführt werden kann.

Zur Lösung dieser Aufgabe wird ein Verfahren zum Konfigurieren eines Energieautomatisierungsgerätes vorgeschlagen, bei dem ein Anlagenschaltbild einer Unterstation eines elektrischen Energieversorgungsnetzes mittels eines Konfigurationsrechners generiert wird, wobei das Anlagenschaltbild zur Anzeige durch eine Anzeigeeinrichtung des Konfigurationsrechners ausgebildet ist und Komponentendarstellungen umfasst, die Primärgeräte der Unterstation grafisch repräsentieren, und wobei das Anlagenschaltbild Verbindungen zwischen den Komponentendarstellungen umfasst, die elektrische Verknüpfungen zwischen den Primärgeräten grafisch repräsentieren. Es wird eine von einem Nutzer des Konfigurationsrechners vorgenommenen Auswahl eines Teilbereichs des Anlagenschaltbilds erfasst und der ausgewählte Teilbereich des Anlagenschaltbildes wird in ein für eine Anzeigeeinrichtung des Energieautomatisierungsgerätes geeignete Anzeigekonfigurationsdatei umgesetzt, indem mittels des Konfigurationsrechners die zwischen den in dem ausgewählten Teilbereich enthaltenen Komponentendarstellungen vorhandenen Verbindungen identifiziert werden und eine Verbindungsinformation erzeugt wird, die die Verbindungen zwischen diesen Komponentendarstellungen angibt, und mittels des Konfigurationsrechners den in dem ausgewählten Teilbereich enthaltenen Komponentendarstellungen vereinfachte Komponentendarstellungen zugeordnet werden, die zur Anzeige auf der Anzeigeeinrichtung des Energieautomatisierungsgerätes geeignet sind. Die entsprechenden vereinfachten Komponentendarstellungen und die Verbindungsinformation werden als Anzeigekonfigurationsdatei in einer Speichereinrichtung des Konfigurationsrechners abgespeichert. Die Anzeigekonfigurationsdatei wird an das Energieautomatisierungsgerät zur Anzeige durch die Anzeigeeinrichtung des Energieautomatisierungsgerätes übertragen.

Durch das erfindungsgemäße Verfahren wird einerseits eine Anzeigekonfigurationsdatei für ein Energieautomatisierungsgerät ohne besonderen manuellen Aufwand und daher nur wenig anfällig gegen Fehler erzeugt. Der Benutzer muss lediglich, z.B. durch Festlegen eines Auswahlrahmens, denjenigen Teilbereich eines Anlagenschaltbildes festlegen, der auf dem Energieautomatisierungsgerät angezeigt werden soll. Bei dem erfindungsgemäßen Verfahren wird außerdem berücksichtigt, dass ein Anlagenschaltbild auf der Anzeigeeinrichtung eines Konfigurationsrechners, bei der es sich meist um einen vergleichsweise großen Monitor mit einer hohen Auflösung und Farbanzeige handelt, anders dargestellt werden kann als auf einer Anzeigeeinrichtung eines Energieautomatisierungsgerätes, bei der es sich häufig - insbesondere aus Kostengründen - um ein vergleichsweise kleines Display mit geringerer Auflösung und Schwarz/Weiß- bzw. Graustufenanzeige handelt. Um solche technisch vorgegebenen Randbedingungen zu berücksichtigen, wird aus dem für die Anzeige auf der Anzeigeeinrichtung des Konfigurationsrechners optimierten Anlagenschaltbild eine Anzeigekonfigurationsdatei gewonnen, die eine vereinfachte Darstellung auf einer Anzeigeeinrichtung des Energieautomatisierungsgerätes ermöglicht.

Eine vorteilhafte Weiterbildung des erfindungsgemäßen Verfahrens sieht vor, dass die Anzeigekonfigurationsdatei mittels des Konfigurationsrechners als Teil eines Parametersatzes abgespeichert wird, der mittels des Konfigurationsrechners erzeugte Einstellungsparameter enthält, die zur Festlegung des Verhaltens des Energieautomatisierungsgerätes während seines Betriebs dienen.

Auf diese Weise kann die Anzeigekonfigurationsdatei quasi als integraler Bestandteil eines ohnehin im Rahmen der Konfigurierung des Energieautomatisierungsgerätes zu erzeugenden Parametersatzes verwendet werden.

Als vorteilhaft wird es zudem angesehen, wenn das Anlagenschaltbild mittels des Konfigurationsrechners unter Verwendung einer Anlagendefinitionsdatei generiert wird, insbesondere einer SSD-Datei gemäß dem Standard IEC 61850, die eine Topologiebeschreibung der Unterstation des elektrischen Energieversorgungsnetzes angibt.

Auf diese Weise muss das Anlagenschaltbild nicht manuell gezeichnet werden, sondern kann aus den ohnehin in einer Anlagendefinitionsdatei - beispielsweise einer SSD-Datei (SSD = "System Specification Description") gemäß dem für die Kommunikation in Unterstationen und Schaltanlagen von elektrischen Energieversorgungsnetzen vorgegebenen Standard IEC 61850 - hinterlegten Daten erzeugt werden, indem die in der Anlagendefinitionsdatei als Beschreibung enthaltenen Angaben zur Topologie der Unterstation bzw. Schaltanlage in eine grafische Darstellung in Form eines Anlagenschaltbildes (z.B. als Single-Line-Darstellung) umgesetzt werden.

Eine weitere vorteilhafte Ausführungsform des erfindungsgemäßen Verfahrens sieht ferner vor, dass zumindest einige der in dem Anlagenschaltbild enthaltenen Komponentendarstellungen solchen Primärgeräten des elektrischen Energieversorgungsnetzes zugeordnet sind, die zumindest zwei verschiedene Betriebszustände einnehmen können, und den entsprechenden Komponentendarstellungen eine Zustandsinformation zugeordnet wird, die das jeweilige durch die Komponentendarstellung repräsentierte Primärgerät und die verschiedenen möglichen Betriebszustände des jeweiligen Primärgerätes angibt.

In diesem Zusammenhang kann konkret vorgesehen sein, dass zur Erzeugung der Anzeigekonfigurationsdatei mittels des Konfigurationsrechners anhand der den Komponentendarstellungen zugeordneten Zustandsinformationen für jeden möglichen Zustand des jeweiligen Primärgerätes eine vereinfachte Komponentendarstellung erzeugt und in die Anzeigekonfigurationsdatei aufgenommen wird.

Auf diese Weise kann eine Anzeigekonfigurationsdatei erzeugt werden, die es dem Energieautomatisierungsgerät ermöglicht, auf seiner Anzeigeeinrichtung je nach Zustand der Primärgeräte (z.B. offen oder geschlossen im Falle eines Schalters) in der Unterstation unterschiedliche Versionen der vereinfachten Komponentendarstellung (z.B. offenes oder geschlossenes Schaltersymbol) anzuzeigen und damit den momentanen Zustand der Schaltanlage korrekt wiederzugeben.

Gemäß einer weiteren vorteilhaften Ausführungsform kann ferner vorgesehen sein, dass der Konfigurationsrechner zur Zuordnung der vereinfachten Komponentendarstellungen zu den Komponentendarstellungen eine Bibliothek umfasst, in der unterschiedlichen Typen von Komponentendarstellungen jeweils vereinfachte Komponentendarstellungen zugeordnet sind, und der Konfigurationsrechner einen Typ der jeweiligen Komponentendarstellung ermittelt und aus der Bibliothek die entsprechende vereinfachte Komponentendarstellung entnimmt.

Unter einem Typ einer Komponentendarstellung ist hierbei zu verstehen, welchen Typ eines Primärgerätes (z.B. Leistungsschalter, Trennschalter, Erdungsschalter, Messwandler, Transformator) die Komponentendarstellung angibt. Jedem Typ einer Komponentendarstellung ist in diesem Fall in einer Bibliothek des Konfigurationsrechners eine vereinfachte Komponentendarstellung (z.B. ein Symbol für einen Leistungsschalter oder einen Stromwandler) zugeordnet, so dass mittels des Konfigurationsrechners problemlos eine Umsetzung des Anlagenschaltbildes in die Anzeigekonfigurationsdatei erfolgen kann.

Eine weitere vorteilhafte Ausführungsform des erfindungsgemäßen Verfahrens sieht zudem vor, dass in der Speichereinrichtung des Konfigurationsrechners eine Anzeigeeinrichtungsinformation gespeichert ist, die Angaben über zumindest eine Größe und eine Auflösung der Anzeigeeinrichtung des Energieautomatisierungsgerätes umfasst, und mittels des Konfigurationsrechners die Anzeigekonfigurationsdatei derart erzeugt wird, dass sie zur Anzeige auf der Anzeigeeinrichtung unter Berücksichtigung der Anzeigeeinrichtungsinformation geeignet ist.

Hierdurch kann je nach Art der Anzeigeeinrichtung des betroffenen Energieautomatisierungsgerätes eine angepasste Anzeigekonfigurationsdatei erzeugt werden, die für die Anzeige auf der fraglichen Anzeigeeinrichtung mit ihren technischen Gegebenheiten optimiert ist.

Konkret kann hierzu vorgesehen sein, dass bei der Erzeugung der Anzeigekonfigurationsdatei unter Berücksichtigung der Anzeigeeinrichtungsinformation zumindest die Größe der vereinfachten Komponentendarstellungen und/oder die Abstände zwischen den vereinfachten Komponentendarstellungen angepasst werden.

Schließlich kann gemäß einer weiteren vorteilhaften Ausführungsform des erfindungsgemäßen Verfahrens vorgesehen sein, dass die Anzeigekonfigurationsdatei an das Energieautomatisierungsgerät übertragen und von einer Datenverarbeitungseinrichtung des Energieautomatisierungsgerätes derart interpretiert wird, dass die Datenverarbeitungseinrichtung mittels der Anzeigekonfigurationsdatei eine grafische Anzeige auf der Anzeigeeinrichtung des Energieautomatisierungsgerätes erzeugt, die die vereinfachten Komponentendarstellungen und die zwischen diesen vorhandenen Verbindungen anzeigt.

Auf diese Weise kann die Anzeigekonfigurationsdatei dazu verwendet werden, die Anzeige auf dem Energieautomatisierungsgerät festzulegen.

Die oben genannte Aufgabe wird zudem durch einen Konfigurationsrechner mit einer Dätenverarbeitungseinrichtung, einer Speichereinrichtung und einer Anzeigeeinrichtung, gelöst der zur Durchführung eines Verfahrens gemäß einem der Ansprüche 1 bis 9 eingerichtet ist.

Die Erfindung wird im Folgenden anhand eines Ausführungsbeispiels näher erläutert. Hierzu zeigen
- Figur 1: ein schematisches Ablaufdiagramm zur Erläuterung eines Verfahrens zum Konfigurieren eines Energieautomatisierungsgerätes;
- Figur 2: ein Ausführungsbeispiel eines Anlagenschaltbildes;
- Figur 3: ein Ausführungsbeispiel einer auf einer Anzeigekonfigurationsdatei basierenden Anzeige auf einem Energieautomatisierungsgerät.

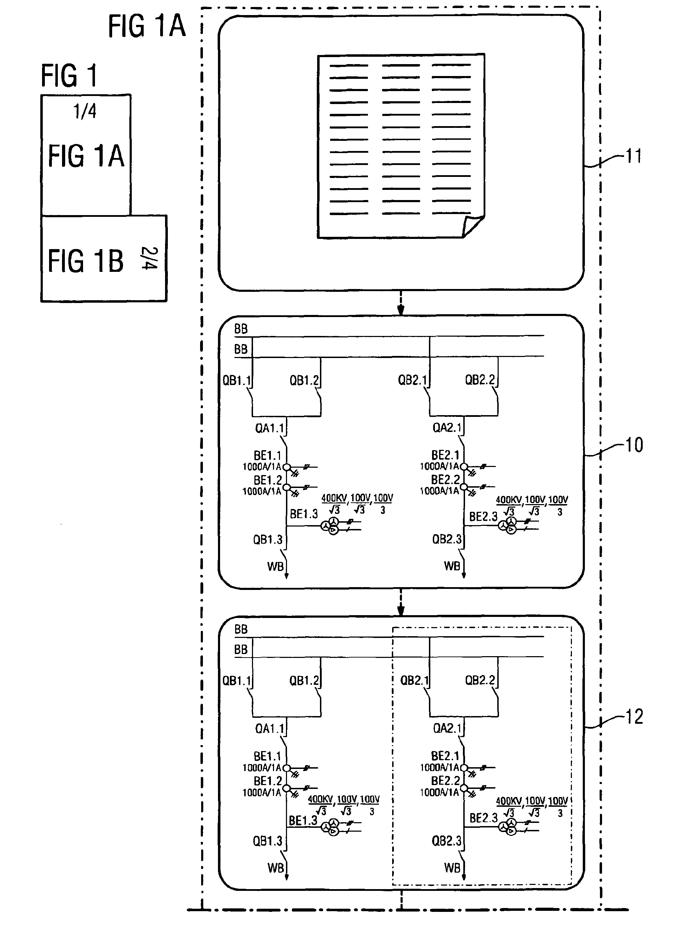

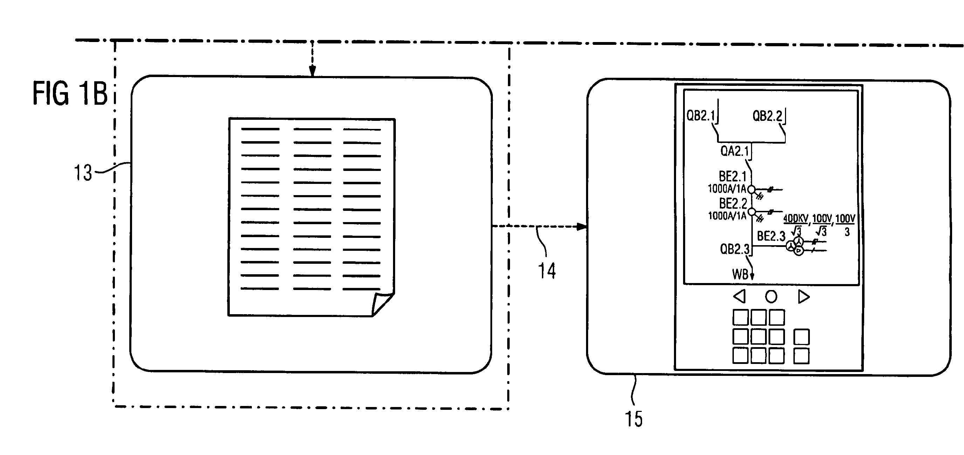

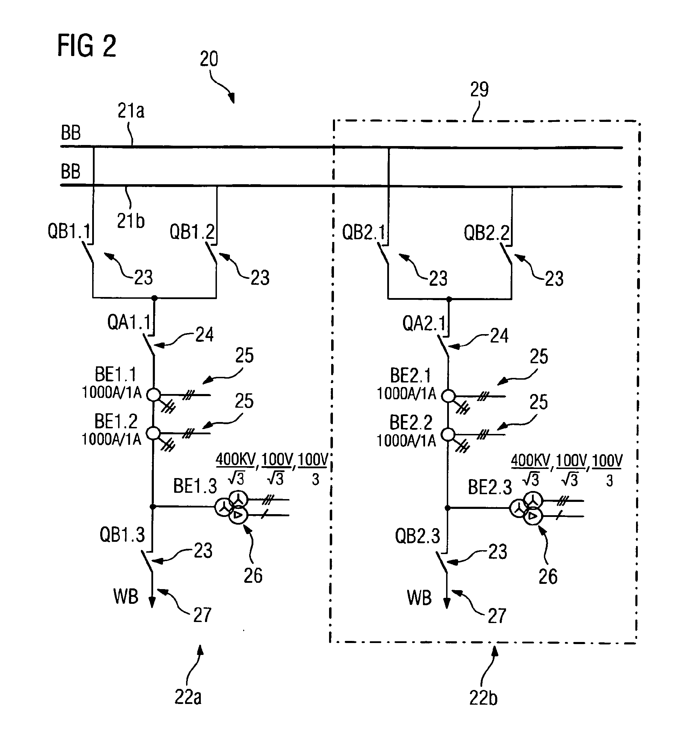

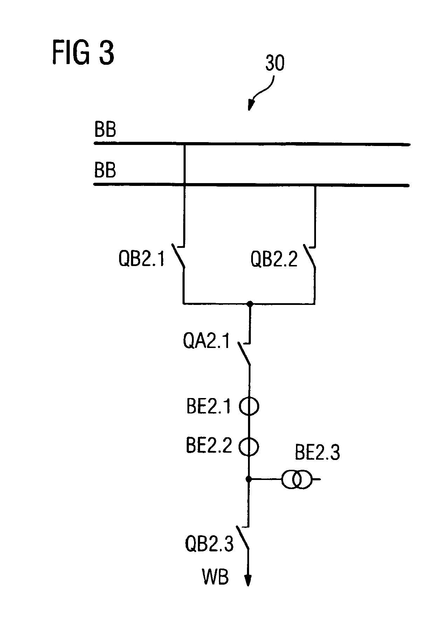

Figur 1 zeigt ein schematisches Ablaufdiagramm zur Erläuterung eines Ausführungsbeispiels eines Verfahrens zum Konfigurieren eines Energieautomatisierungsgerätes, konkret zur Konfigurierung eines Energieautomatisierungsgerätes mit einer Anzeigeeinrichtung (z.B. einem Display) hinsichtlich der auf der Anzeigeeinrichtung dargestellten Anzeige. Energieautomatisierungsgeräte, wie z.B. Schutzgeräte, Stationsleitgeräte oder Messgeräte (RTUs) für Energieautomatisierungsanlagen werden immer häufiger in Ausführungen mit Anzeigeeinrichtungen, wie z.B. LCD-Displays ausgeliefert. Benutzer solcher Energieautomatisierungsgeräte wollen mit der Anzeigeeinrichtung häufig Elemente eines elektrischen Energieversorgungsnetzes, wie z.B. einen von einem Schutzgerät überwachten Abzweig (Bay) einer Schaltstation bzw. Unterstation des Energieversorgungsnetzes, grafisch darstellen. Dabei muss berücksichtigt werden, dass die Anzeigeeinrichtungen der Energieautomatisierungsgeräte üblicherweise aus Kostengründen eine vergleichsweise geringe Größe und eine niedrige Auflösung aufweisen. Mit dem in Figur 1 unter Hinzunahme der Figuren 2 und 3 beschriebenen Verfahren lässt sich eine derartige Konfigurierung eines Energieautomatisierungsgerätes hinsichtlich der grafischen Anzeige auf seiner Anzeigeeinrichtung besonders einfach, schnell und fehlerunanfällig durchführen.

In einem ersten Schritt 10 wird mittels eines Konfigurationsrechners, bei dem es sich z.B. um einen PC oder einen Laptop handeln kann, auf dem eine Konfigurationssoftware abläuft (z.B. die Konfigurationssoftware DIGSI der Siemens AG), ein Anlagenschaltbild einer Unterstation des elektrischen Energieversorgungsnetzes generiert. Ein solches Anlagenschaltbild wird üblicherweise in der auch als "Single-Line-Darstellung" bekannten Weise dargestellt. Mit einem Anlagenschaltbild werden die zu einer Anlage (z.B. eine Unterstation bzw. Schaltstation) eines elektrischen Energieversorgungsnetzes gehörenden Primärgeräte (z.B. Sammelschienen, Leistungsschalter, Trennschalter, Transformatoren, Erdungsschalter, Stromwandler, Spannungswandler) grafisch repräsentiert. Außerdem zeigt ein Anlagenschaltbild die elektrischen Verbindungen zwischen den Primärgeräten an.

Ein Beispiel eines als Single-Line-Darstellung ausgeführten Anlagenschaltbildes 20 ist in Figur 2 gezeigt. Wenn bei der folgenden Beschreibung von einer Komponentendarstellung einer Primärkomponente gesprochen wird, soll hierunter jeweils die grafische Repräsentierung der jeweiligen Primärkomponente verstanden werden. Das Anlagenschaltbild 20 in Figur 2 zeigt zwei mit "BB" bezeichnete Komponentendarstellungen von Sammelschienen 21a und 21b, mit denen ein erster Abzweig 22a und ein zweiter Abzweig 22b verbunden sind. Die Abzweige 22a und 22b sollen zu einer gemeinsamen Unterstation des Energieversorgungsnetzes gehören. Zu jedem Abzweig gehören Komponentendarstellungen von Trennschaltern 23, je eines Leistungsschalters 24, von Stromwandlern 25 bzw. Spannungswandlern 26 sowie je eines Kabelabgangs. Neben den jeweiligen Komponentendarstellungen sind jeweils Kurzbezeichnungen dargestellt, die die jeweilige mit der Komponentendarstellung repräsentierte Primärkomponente gemäß einer in der Energieautomatisierung üblichen Schreibweise angeben. So wird mit "QB" ein Trennschalter und mit "QA" ein Leistungsschalter bezeichnet. "BE" steht für Strom- bzw. Spannungswandler, während mit "WB" ein Kabelabgang bezeichnetet wird. Teilweise sind darüber hinaus gehende Informationen zu den Primärkomponenten gezeigt; Figur 2 zeigt z.B. Messbereiche bzw. Übersetzungsverhältnisse der Strom- bzw. Spannungswandler an.

Die Darstellung gemäß Figur 2 zeigt lediglich der einfacheren Erläuterung halber zwei vergleichsweise einfach gehaltene übereinstimmende Abzweige; im Rahmen der Erfindung können selbstverständlich beliebig komplexe Anlagenschaltbilder mit mehr oder weniger Komponenten zum Einsatz kommen. Ebenso kann ein Anlagenschaltbild auch andere Primärkomponenten als die im Anlagenschaltbild 20 gezeigten aufweisen (z.B. Transformatoren, Erdungsschalter).

Die Generierung eines Anlagenschaltbildes kann beispielsweise von einem Benutzer des Konfigurationsrechners mittels eines grafischen Editors manuell vorgenommen werden. Besonders einfach und fehlerunanfällig kann ein Anlagenschaltbild jedoch aus einer bereits bestehenden Anlagendefinitionsdatei, wie z.B. einer SSD (SSD = "System Specification Description") gemäß dem Standard IEC 61850, erfolgen. Dabei wird die in der Anlagendefinitionsdatei mittels einer Beschreibungssprache (z.B. SCL = "Substation Configuration Language" gemäß IEC 61850) beschriebene Topologie der Unterstation in eine grafische Repräsentierung mit Komponentendarstellungen und den entsprechenden Verbindungen umgesetzt. Da für diese Umsetzung keine manuellen Schritte notwendig sind, ist diese sehr unanfällig gegen Übertragungsfehler. In Figur 1 ist mit einem optionalen Schritt 11 die Umsetzung einer Anlagendefinitionsdatei in ein Anlagenschaltbild dargestellt.

Vergleichsweise große, komplexe und mit ausführlichen Informationen versehene Anlagenschaltbilder wie das Anlagenschaltbild 20 gemäß Figur 2 eignen sich gut für eine Darstellung auf einer Anzeigeeinrichtung eines Konfigurationsrechners, bei der es sich üblicherweise um einen Bildschirm mit relativ großer Anzeigefläche und hoher Auflösung handelt. Für eine Anzeige auf einer vergleichsweise kleinen und mit niedriger Auflösung ausgestatteten Anzeigeeinrichtung eines Energieautomatisierungsgerätes ist ein solches Anlagenschaltbild jedoch nicht gut geeignet. Daher muss das Anlagenschaltbild zur Anzeige auf einer Anzeigeeinrichtung eines Energieautomatisierungsgerätes optimiert werden. Die dafür notwendigen Schritte werden im Folgenden beschrieben.

Zunächst wird vom Konfigurationsrechner in einem weiteren Schritt 12 eine von dem Benutzer des Konfigurationsrechners vorgenommene Auswahl eines Teilbereichs des Anlagenschaltbildes erkannt. Eine solche Auswahl kann beispielsweise durch Aufspannen eines Rahmens um die auszuwählenden Elemente des Anlagenschaltbildes erfolgen. In Figur 2 ist beispielhaft ein Rahmen 29 gezeigt, mit dem ein Benutzer des Konfigurationsrechners den zweiten Abzweig 22b des Anlagenschaltbildes 20 ausgewählt hat.

Daraufhin wird in einem weiteren Schritt 13 der ausgewählte Teilbereich des Anlagenschaltbildes 20 in eine Anzeigekonfigurationsdatei umgesetzt. Die Anzeigekonfigurationsdatei umfasst durch ein Energieautomatisierungsgerät lesbare und umsetzbare Anweisungen zur Erzeugung einer Anzeige auf einer Anzeigeeinrichtung des Energieautomatisierungsgerätes. Die Anzeigekonfigurationsdatei kann hierbei eine Textdatei, eine Bilddatei oder eine Kombination aus beiden Arten sein und ist derart ausgestaltet, dass ein Energieautomatisierungsgerät durch Interpretation der Anzeigekonfigurationsdatei eine geeignete Anzeige für seine Anzeigeeinrichtung erzeugen kann. Insbesondere werden hierbei die im Vergleich zu einem Computermonitor reduzierten technischen Mittel 8geringere Anzeigefläche und/oder geringere Auflösung) der Anzeigeeinrichtung des Energieautomatisierungsgerätes berücksichtigt.

Zur Umsetzung des Anlagenschaltbildes in eine Anzeigekonfigurationsdatei werden hierbei die nachfolgend erläuterten, in Figur 1 nicht im Einzelnen dargestellten, Schritte durchgeführt. Der Konfigurationsrechner identifiziert hierzu die Verbindungen, die zwischen den in dem Auswahlbereich vorhandenen Komponentendarstellungen liegen. Entsprechend den identifizierten Verbindungen wird eine Verbindungsinformation erzeugt, die die Verbindungen zwischen den Komponentendarstellungen wiedergibt. Dies kann grafisch oder in Form einer textbasierten Beschreibung erfolgen. Außerdem werden den in dem Auswahlbereich liegenden Komponentendarstellungen vereinfachte Komponentendarstellungen zugeordnet. Die vereinfachten Komponentendarstellungen haben dieselbe inhaltliche Bedeutung wie die Komponentendarstellungen, weisen aber eine grafisch einfachere Darstellung auf, so dass sie sich mittels der Anzeigeeinrichtung des Energieautomatisierungsgerätes anzeigen lassen.

Eine solche Zuordnung von vereinfachten Komponenten zu den Komponenten des Anlagenschaltbildes kann beispielsweise unter Verwendung einer auf dem Konfigurationsrechner gespeicherten Bibliothek erfolgen, die eine Katalog möglicher vereinfachter Komponentendarstellungen umfasst. Hierzu wird zunächst jeder Komponentendarstellung des Anlagenschaltbildes ein "Typ" zugewiesen, der die Art der Komponentendarstellung beschreibt (z.B. Typ "Trennschalter" für die Komponentendarstellungen 23 des Anlagenschaltbildes 20 aus Figur 2 und Typ "Stromwandler" für die Komponentendarstellungen 25). Jedem dieser Typen von Komponentendarstellungen ist in der Bibliothek des Konfigurationsrechners eine entsprechende vereinfachte Komponentendarstellung zugeordnet. Eine solche vereinfachte Komponentendarstellung kann z.B. ein Symbol oder eine weniger detailliert ausgeführte Darstellung der Komponentendarstellung des Anlagenschaltbildes sein, d.h. für die Vor-Ort-Bedienung direkt am Energieautomatisierungsgerät unwesentliche Details werden automatisch entfernt (z.B. Strom- und Spannungswandler werden nur stark vereinfacht dargestellt, da lediglich ihre Position, nicht aber ihre spezielle Ausgestaltung für die Anzeige auf dem Energieautomatisierungsgerät von Bedeutung ist).

Die vereinfachten Komponentendarstellungen und die Verbindungsinformation werden als Anzeigekonfigurationsdatei in einer (internen oder externen) Speichereinrichtung des Konfigurationsrechners gespeichert. Dabei wird darauf geachtet, dass die relative Position der Komponentendarstellungen des Anlagenschaltbildes zueinander auch in die Positionierung der vereinfachten Komponentendarstellungen der Anzeigekonfigurationsdatei einfließt (z.B. Stromwandler sind oberhalb des Spannungswandlers angeordnet). Wurden im Anlagenschaltbild Komponentendarstellungen gedreht oder gespiegelt dargestellt, kann dies bei einer Ausgestaltung des Verfahrens auch bei der Anlegung der vereinfachten Komponentendarstellungen der Anzeigekonfigurationsdatei berücksichtigt werden. Optional können ferner die Beschriftungen der Komponentendarstellungen im Anlagenschaltbild (z.B. "QB2.1", "BE2.2") in die Anzeigekonfigurationsdatei zur Anzeige neben den entsprechenden vereinfachten Komponentendarstellungen übernommen werden. Für die Vor-Ort-Bedienung unwesentliche Beschriftungsteile, wie z.B. die Angabe der Messbereiche bzw. des Umsetzungsverhältnisses der Strom- bzw. Spannungswandler, können hierbei komplett weggelassen werden.

Außerdem kann optional vorgesehen sein, dass zur Anpassung der Anzeigekonfigurationsdatei an die für die Anzeige zu verwendende Anzeigeeinrichtung des Energieautomatisierungsgerätes eine Anzeigeeinrichtungsinformation verwendet wird, die auf dem Konfigurationsrechner als zu der fraglichen Anzeigeeinrichtung gehörend gespeichert ist und die zumindest die Größe der Anzeigeeinrichtung (also die Anzeigefläche) und/oder deren Auflösung angibt. Zur Anpassung der Anzeigekonfigurationsdatei kann dann vorgesehen sein, dass die Größe der vereinfachten Komponentendarstellungen auf die Anzeige in der Anzeigeeinrichtung des Energieautomatisierungsgerätes optimiert wird und die Abstände zwischen den vereinfachten Komponentendarstellungen so angepasst werden, dass eine optimale Ausnutzung der begrenzten Anzeigefläche der Anzeigeeinrichtung des Energieautomatisierungsgerätes erfolgt.

Außerdem kann optional vorgesehen sein, dass automatisch erkannt wird, wenn nicht die komplette durch die Anzeigekonfigurationsdatei definierte Abbildung auf die Anzeigefläche der Anzeigeeinrichtung des Energieautomatisierungsgerätes passt und die Anzeige entsprechend auf mehrere umschaltbare Seiten der Anzeigeeinrichtung verteilt wird.

Die auf diese Weise erzeugte Anzeigekonfigurationsdatei wird in der Speichereinrichtung des Energieautomatisierungsgerätes gespeichert. Dabei kann die Anzeigekonfigurationsdatei separat gespeichert werden oder einen Bestandteil eines Parametersatzes bilden, der darüber hinaus weitere Einstellungsparameter beinhaltet, die das Verhalten des Energieautomatisierungsgerätes während seines Betriebes angeben.

Die Schritte 10 bis 13 (Figur 1) finden in dem Konfigurationsrechner statt, wie durch einen strichpunktierten Rahmen in Figur 1 angedeutet werden soll.

Die Anzeigekonfigurationsdatei (ggf. als Bestandteil des Parametersatzes) kann daraufhin über eine zwischen dem Konfigurationsrechner und dem Energieautomatisierungsgerät bestehende Kommunikationsverbindung oder mittels eines Datenträgers an das entsprechende Energieautomatisierungsgerät übermittelt werden, wie durch einen gestrichelten Pfeil 14 angedeutet wird. Eine Datenverarbeitungseinrichtung des Energieautomatisierungsgerätes liest die Anzeigekonfigurationsdatei ein und interpretiert sie in der Art, dass in einem folgenden Schritt 15 die durch die Anzeigekonfigurationsdatei angegebene Anzeige in der Anzeigeeinrichtung des Energieautomatisierungsgerätes dargestellt wird.

In Figur 3 ist beispielhaft eine durch die Anzeigekonfigurationsdatei aus dem Auswahlbereich des Anlagenschaltbildes gemäß Figur 2 angegebene Darstellung 30 auf der Anzeigeeinrichtung des Energieautomatisierungsgerätes dargestellt. Man erkennt, dass durch die Darstellung 30 eine inhaltlich dem in Figur 2 ausgewählten zweiten Abzweig 22b entsprechende Anzeige angegeben ist, die jedoch vereinfachte Komponentendarstellungen für die einzelnen Primärgeräte aufweist. So sind beispielsweise aus den Komponentendarstellungen 25 für die Stromwandler die vereinfachten Komponentendarstellungen 31 erzeugt worden.

Gemäß einer weiteren Ausführungsform kann zudem vorgesehen sein, dass das Anlagenschaltbild "interaktive Elemente" aufweist, also Komponentendarstellungen von Primärgeräten des Energieversorgungsnetzes, die unterschiedliche Zustände (z.B. im Falle eines Schalters: offen, geschlossen) einnehmen können. Hierbei können solchen Komponentendarstellungen entsprechende Zustandsinformationen zugeordnet sein, die einerseits das fragliche Primärgerät und andererseits die von diesem einnehmbaren Betriebszustände angeben. Bei der Umsetzung zur Anzeigekonfigurationsdatei können dann für solche Primärgeräte verschiedene Versionen von vereinfachten Komponentendarstellungen, also für jeden möglichen Betriebszustand eine separate vereinfachte Komponentendarstellung, erzeugt und abgespeichert werden (z.B. für einen Schalter eine Darstellung mit geöffneter und eine mit geschlossener Strombahn).

Bei der Interpretation der Anzeigekonfigurationsdatei im Energieautomatisierungsgerät kann dann eine Verknüpfung der Version der vereinfachten Komponentendarstellung mit einem durch das Energieautomatisierungsgerät erfassten Zustand der realen Primärkomponente vorgenommen werden, so dass der jeweilige Betriebszustand des Primärgerätes durch Auswahl der dazu passenden Version der vereinfachten Komponentendarstellung angezeigt wird.

Auf die beschriebene Weise kann einfach und fehlersicher eine Konfigurierung eines Energieautomatisierungsgerätes hinsichtlich der von ihm darzustellenden Anzeige erfolgen, ohne dass - wie heutzutage noch üblich - eine aufwendige manuelle Erstellung einer Displayanzeige erfolgen muss.

## Patentansprüche

1. Verfahren zum Konfigurieren eines Energieautomatisierungsgerätes, bei dem folgende Schritte durchgeführt werden:
- Generieren (10) eines Anlagenschaltbildes einer Unterstation eines elektrischen Energieversorgungsnetzes mittels eines Konfigurationsrechners, wobei das Anlagenschaltbild zur Anzeige durch eine Anzeigeeinrichtung des Konfigurationsrechners ausgebildet ist und Komponentendarstellungen umfasst, die Primärgeräte der Unterstation grafisch repräsentieren, und wobei das Anlagenschaltbild Verbindungen zwischen den Komponentendarstellungen umfasst, die elektrische Verknüpfungen zwischen den Primärgeräten grafisch repräsentieren;
- Erfassen (12) einer von einem Nutzer des Konfigurationsrechners vorgenommenen Auswahl eines Teilbereichs des Anlagenschaltbilds;
- Umsetzen (13) des ausgewählten Teilbereichs des Anlagenschaltbildes in eine für eine Anzeigeeinrichtung des Energieautomatisierungsgerätes geeignete Anzeigekonfigurationsdatei, indem
- mittels des Konfigurationsrechners die zwischen den in dem ausgewählten Teilbereich enthaltenen Komponentendarstellungen vorhandenen Verbindungen identifiziert werden und eine Verbindungsinformation erzeugt wird, die die Verbindungen zwischen diesen Komponentendarstellungen angibt;
- mittels des Konfigurationsrechners den in dem ausgewählten Teilbereich enthaltenen Komponentendarstellungen vereinfachte Komponentendarstellungen zugeordnet werden, die zur Anzeige auf der Anzeigeeinrichtung des Energieautomatisierungsgerätes geeignet sind; und
- die entsprechenden vereinfachten Komponentendarstellungen und die Verbindungsinformation als Anzeigekonfigurationsdatei in einer Speichereinrichtung des Konfigurationsrechners abgespeichert werden; und
- Übertragen der Anzeigekonfigurationsdatei an das Energie-automatisierungsgerät zur Anzeige durch die Anzeigeeinrichtung des Energieautomatisierungsgerätes.

2. Verfahren nach Anspruch 1,
**dadurch gekennzeichnet, dass**
- die Anzeigekonfigurationsdatei mittels des Konfigurationsrechners als Teil eines Parametersatzes abgespeichert wird, der mittels des Konfigurationsrechners erzeugte Einstellungsparameter enthält, die zur Festlegung des Verhaltens des Energieautomatisierungsgerätes während seines Betriebs dienen.

3. Verfahren nach Anspruch 1 oder 2,
**dadurch gekennzeichnet, dass**
- das Anlagenschaltbild mittels des Konfigurationsrechners unter Verwendung einer Anlagendefinitionsdatei generiert wird (Schritt 11), insbesondere einer SSD-Datei gemäß dem Standard IEC 61850, die eine Topologiebeschreibung der Unterstation des elektrischen Energieversorgungsnetzes angibt.

4. Verfahren nach einem der vorangehenden Ansprüche,
**dadurch gekennzeichnet, dass**
- zumindest einige der in dem Anlagenschaltbild enthaltenen Komponentendarstellungen solchen Primärgeräten des elektrischen Energieversorgungsnetzes zugeordnet sind, die zumindest zwei verschiedene Betriebszustände einnehmen können; und
- den entsprechenden Komponentendarstellungen eine Zustandsinformation zugeordnet wird, die das jeweilige durch die Komponentendarstellung repräsentierte Primärgerät und die verschiedenen möglichen Betriebszustände des jeweiligen Primärgerätes angibt.

5. Verfahren nach Anspruche 4,
**dadurch gekennzeichnet, dass**
- zur Erzeugung der Anzeigekonfigurationsdatei mittels des Konfigurationsrechners anhand der den Komponentendarstellungen zugeordneten Zustandsinformationen für jeden möglichen Zustand des jeweiligen Primärgerätes eine vereinfachte Komponentendarstellung erzeugt und in die Anzeigekonfigurationsdatei aufgenommen wird.

6. Verfahren nach einem der vorangehenden Ansprüche,
**dadurch gekennzeichnet, dass**
- der Konfigurationsrechner zur Zuordnung der vereinfachten Komponentendarstellungen zu den Komponentendarstellungen eine Bibliothek umfasst, in der unterschiedlichen Typen von Komponentendarstellungen jeweils vereinfachte Komponentendarstellungen zugeordnet sind; und
- der Konfigurationsrechner einen Typ der jeweiligen Komponentendarstellung ermittelt und aus der Bibliothek die entsprechende vereinfachte Komponentendarstellung entnimmt.

7. Verfahren nach einem der vorangehenden Ansprüche,
**dadurch gekennzeichnet, dass**
- in der Speichereinrichtung des Konfigurationsrechners eine Anzeigeeinrichtungsinformation gespeichert ist, die Angaben über zumindest eine Größe und/oder eine Auflösung der Anzeigeeinrichtung des Energieautomatisierungsgerätes umfasst; und
- mittels des Konfigurationsrechners die Anzeigekonfigurationsdatei derart erzeugt wird, dass sie zur Anzeige auf der Anzeigeeinrichtung unter Berücksichtigung der Anzeigeeinrichtungsinformation geeignet ist.

8. Verfahren nach Anspruch 7,
**dadurch gekennzeichnet, dass**
- bei der Erzeugung der Anzeigekonfigurationsdatei unter Berücksichtigung der Anzeigeeinrichtungsinformation zumindest die Größe der vereinfachten Komponentendarstellungen und/oder die Abstände zwischen den vereinfachten Komponentendarstellungen angepasst werden.

9. Verfahren nach einem der vorangehenden Ansprüche,
**dadurch gekennzeichnet, dass**
- die Anzeigekonfigurationsdatei an das Energieautomatisierungsgerät übertragen und von einer Datenverarbeitungseinrichtung des Energieautomatisierungsgerätes derart interpretiert wird, dass die Datenverarbeitungseinrichtung mittels der Anzeigekonfigurationsdatei eine grafische Anzeige auf der Anzeigeeinrichtung des Energieautomatisierungsgerätes erzeugt, die die vereinfachten Komponentendarstellungen und die zwischen diesen vorhandenen Verbindungen anzeigt.

10. Konfigurationsrechner mit einer Datenverarbeitungseinrichtung, einer Speichereinrichtung und einer Anzeigeeinrichtung,
**dadurch gekennzeichnet, dass**
- der Konfigurationsrechner zur Durchführung eines Verfahrens gemäß einem der Ansprüche 1 bis 9 eingerichtet ist.

## Claims

1. Method for configuring an energy automation device, in which the following steps are carried out:
- generating (10) a system circuit diagram of a substation of an electrical power grid by means of a configuration computer, wherein the system circuit diagram is designed to be displayed by a display device of the configuration computer and comprises component depictions that are graphical representations of primary devices of the substation, and wherein the system circuit diagram comprises connections between the component depictions that are graphical representations of electrical links between the primary devices;
- detecting (12) a selection of a portion of the system circuit diagram that is made by a user of the configuration computer;
- converting (13) the selected portion of the system circuit diagram into a display configuration file that is suitable for a display device of the energy automation device, by
- identifying the connections existing between the component depictions contained in the selected portion by means of the configuration computer and creating connection information that specifies the connections between these component depictions;
- associating simplified component depictions with the component depictions contained in the selected portion by means of the configuration computer, which are suitable for being displayed on the display device of the energy automation device; and
- storing the corresponding simplified component depictions and the connection information as a display configuration file in a storage device of the configuration computer; and
- transferring the display configuration file to the energy automation device for display by the display device of the energy automation device.

2. Method according to Claim 1,
**characterized in that**
- the display configuration file is stored by means of the configuration computer as part of a parameter set containing configuration parameters that are created by means of the configuration computer, which are used to determine the behavior of the energy automation device during its operation.

3. Method according to Claim 1 or 2,
**characterized in that**
- the system circuit diagram is generated by means of the configuration computer using a system definition file (step 11), in particular, an SSD file in accordance with the IEC 61850 standard, which specifies a description of the topology of the substation of the electrical power grid.

4. Method according to one of the previous claims,
**characterized in that**
- at least some of the component depictions contained in the system circuit diagram are associated with primary devices of the electrical power grid that can assume at least two different operating states; and
- state information is associated with the corresponding component depictions that specifies the respective primary device represented by the component depiction and the various possible operating states of the respective primary device.

5. Method according to Claim 4,
c h a r a c t e r i z e d in that
- a simplified component depiction is created and entered into the display configuration file in order to create the display configuration file by means of the configuration computer with the aid of the state information for each possible state of the respective primary device that is associated with the component depictions.

6. Method according to one of the previous claims,
**characterized in that**
- the configuration computer comprises a library for associating the simplified component depictions with the component depictions, in which simplified component depictions are respectively associated with different types of component depictions; and
- the configuration computer identifies a type of the respective component depiction and takes the corresponding simplified component depiction from the library.

7. Method according to one of the previous claims,
**characterized in that**
- display device information is stored in the storage device of the configuration computer, which comprises specifications of at least one size and/or one resolution of the display device of the energy automation device; and
- the display configuration file is created by means of the configuration computer such that it is suitable for being displayed on the display device, taking into account the display device information.

8. Method according to Claim 7,
c h a r a c t e r i z e d in that
- at least the size of the simplified component depictions and/or the spaces between the simplified component depictions are adjusted when creating the display configuration file, taking into account the display device information.

9. Method according to one of the previous claims,
**characterized in that**
- the display configuration file is transferred to the energy automation device and interpreted by a data processing device of the energy automation device such that the data processing device creates a graphical display on the display device of the energy automation device by means of the display configuration file that displays the simplified component depictions and the connections existing between them.

10. Configuration computer having a data processing device, a storage device, and a display device,
**characterized in that**
- the configuration computer is equipped to carry out a method according to one of Claims 1 to 9.

## Revendications

1. procédé de configuration d'un appareil d'automatisation d'énergie, dans lequel on effectue les stades suivantes :
- création d'un schéma des connexions d'installation d'une sous-station d'un réseau d'alimentation en énergie électrique au moyen d'un ordinateur de configuration, le schéma des connexions d'installation étant constitué pour l'affichage par un dispositif d'affichage de l'ordinateur de configuration et comprenant des représentations de composants qui représentent graphiquement les appareils primaires de la sous-station et, dans lequel le schéma des connexions d'installation comprend des liaisons entre les représentations de composants, qui représentent graphiquement des combinaisons électriques entre les appareils primaires,
- la détection (12) d'une sélection, effectuée par un utilisateur de l'ordinateur de configuration, d'une région partielle du schéma des connexions de l'installation,
- la transformation (13) de la région partielle sélectionnée du schéma des connexions d'installation en un fichier de configuration d'affichage approprié à un dispositif d'affichage de l'appareil d'automatisation d'énergie,
en
- identifiant au moyen de l'ordinateur de configuration les liaisons présentes entre les représentations de composants obtenues dans la région partielle sélectionnée et en produisant une information de liaisons, qui indique les liaisons entre ces représentations de composants ;
- affectant au moyen de l'ordinateur de configuration aux représentations de composants contenues dans la région partielle sélectionnée des représentations de composants simplifiées, qui sont appropriées à l'affichage sur le dispositif d'affichage de l'appareil d'automatisation d'énergie ; et
- mémorisant les représentations de composants simplifiées correspondant à une information de liaison comme fichier de configuration d'affichage dans un dispositif de mémorisation de l'ordinateur de configuration ; et
- transmettant le fichier de configuration d'affichage à l'appareil d'automatisation d'énergie pour l'affichage par le dispositif d'affichage de l'appareil d'automatisation d'énergie.

2. Procédé suivant la revendication 1,
**caractérisé en ce que**
- l'on mémorise le fichier de configuration d'affichage au moyen de l'ordinateur de configuration comme partie d'un jeu de paramètres, qui contient des paramètres de réglage produits au moyen de l'ordinateur de configuration, lesquels servent à la fixation du comportement de l'appareil d'automatisation d'énergie pendant son fonctionnement.

3. Procédé suivant la revendication 1 ou 2,
**caractérisé en ce que**
- l'on crée le schéma des connexions d'installation au moyen de l'ordinateur de configuration, en utilisant un fichier de définition d'installation (stade 11), notamment un fichier SSD suivant la norme IEC 61850, qui indique une description topologique de la sous-station du réseau d'alimentation en énergie électrique.

4. Procédé suivant l'une des revendications précédentes,
**caractérisé en ce que**
- au moins certaines des représentations de composants contenues dans le schéma des connexions d'installation sont affectées aux appareils primaires du réseau d'alimentation en énergie électrique qui peuvent prendre au moins deux états de fonctionnement différents ; et
- on affecte aux représentations de composants correspondant une information d'état, qui indique l'appareil primaire respectif représenté par la représentation de composants et les états de fonctionnement possibles différents de l'appareil primaire respectif.

5. Procédé suivant la revendication 4,
**caractérisé en ce que**
- pour produire le fichier de configuration d'affichage, on produit, au moyen de l'ordinateur de configuration, à l'aide des informations d'état affectées aux représentations de composants, pour chaque état possible d'appareils primaires respectifs, une représentation de composants simplifiée et on l'enregistre dans le fichier de configuration d'affichage.

6. Procédé suivant l'une quelconque des revendications précédentes,
**caractérisé en ce que**
- l'ordinateur de configuration comprend, pour l'affectation des représentations de composants simplifiées aux représentations de composants, une bibliothèque dans laquelle des types différents de représentations de composants sont affectés respectivement à des représentations de composants simplifiées ; et
- l'ordinateur de configuration détermine un type de représentation de composants respectif et prend dans la bibliothèque la représentation de composants simplifiée correspondante.

7. Procédé suivant l'une des revendications précédentes,
**caractérisé en ce que**
- il est mémorisé dans le dispositif de mémorisation de l'ordinateur de configuration une information de dispositif d'affichage, qui comprend des indications sur au moins une dimension et/ou une résolution du dispositif d'affichage de l'appareil d'automatisation d'énergie ; et
- on produit au moyen de l'ordinateur de configuration le ficher de configuration d'affichage de manière à ce qu'il convienne à l'affichage sur le dispositif d'affichage en tenant compte de l'information de dispositif d'affichage.

8. Procédé suivant la revendication 7,
**caractérisé en ce que**
- lors de la production du fichier de configuration d'affichage, on adapte en tenant compte de l'information de dispositif d'affichage au moins la dimension des représentations de composants simplifiées et/ou les distances entre les représentations de composants simplifiées.

9. Procédé suivant l'une des revendications précédentes,
**caractérisé en ce que**
- on interprète le fichier de configuration d'affichage transmis à l'appareil d'automatisation d'énergie et par un dispositif de traitement de données de l'appareil d'automatisation d'énergie, de manière à ce que le dispositif de traitement de données produise, au moyen du fichier de configuration d'affichage, un affichage graphique sur le dispositif d'affichage de l'appareil d'automatisation d'énergie, qui affiche les représentations de composants simplifiées et les liaisons présentes entre celles-ci.

10. Ordinateur de configuration, ayant un dispositif de traitement de données, un dispositif de mémorisation et un dispositif d'affichage,
**caractérisé en ce que**
- l'ordinateur de configuration est conçu pour effectuer un procédé suivant l'une des revendications 1 à 9.
